# EUROPÄISCHE PATENTSCHRIFT

(11) **EP 0 621 408 B1**
(45) Veröffentlichungstag und Bekanntmachung des Hinweises auf die Patenterteilung: **23.07.1997**
(21) Anmeldenummer: 94103550.3
(22) Anmeldetag: 09.03.1994
(51) Int. Cl.: F15B 15/20, B25J 9/14, B25J 19/00

(54) **Fluidbetätigter Arbeitszylinder mit integrierten Stell- und Steuergliedern**
Fluid cylinder with integrated actuators
Vérin de travail actionné par fluide avec actionneurs intégrés

(30) Priorität: 19.03.1993 CH 835/93; 28.02.1994 CH 582/94
(43) Veröffentlichungstag der Anmeldung: 26.10.1994
(73) Patentinhaber: ZINDEL CONSULTING, CH-8805 Richterswil (CH)
(72) Erfinder: Zindel, Jacques, CH-8805 Richterswil (CH)
(74) Vertreter: Althoff, Gerhard

(56) Entgegenhaltungen:
- EP-A- 0 299 285
- FR-A- 2 213 212
- US-A- 4 665 558

## Beschreibung

Die Erfindung bezieht sich auf einen fluidbetätigten Arbeitszylinder, bestehend aus einem an beiden Enden jeweils mit einem Flanschkörper versehenen Gehäuse, einem das Gehäuse in axialer Richtung durchdringenden und in den beabstandeten Flanschkörpern abgedichtet gelagerten Zylinderkörper sowie einer darin gelagerten und mit einem den Zylinderraum in axialer Richtung in zwei Zylinderkammern unterteilenden Kolben in Wirkverbindung stehenden Kolbenstange, an welcher an den beidseitig aus dem Gehäuse herausragenden Enden je ein Anbauelement angeordnet und befestigt ist, von welchen mindestens das eine zur Aufnahme mindestens eines mit elektrisch/pneumatischer oder elektrisch/hydraulischer Energie zu versorgenden Peripheriegerätes ausgebildet ist.

Aus der Handhabungstechnik für die Montageautomation sind als Lineareinheit ausgebildete Arbeitszylinder allgemein bekannt (vgl. EP-A 0 299 285), welche im wesentlichen ein durch seitliche Flanschkörper begrenztes und in einem Gehäuse angeordnetes Zylinderrohr, eine in axialer Richtung darin gelagerte und die beiden Flanschkörper abgedichtet durchdringende Kolbenstange sowie einen daran angeordneten Kolben umfasst, durch welchen das Zylinderrohr in zwei Kammern unterteilt ist. An den aus dem Gehäuse herausragenden Enden der Kolbenstange ist je ein etwa flanschförmig ausgebildeter Anbaukörper angeordnet und befestigt, von welchen mindestens einer zur Aufnahme und Befestigung weiterer Peripheriegeräte in Form von Greiferorganen oder dergleichen ausgebildet ist. Die elektrisch/pneumatische oder elektrisch/hydraulische Energieversorgung der Peripheriegeräte erfolgt hierbei über die an eine externe Energiequelle angeschlossene und etwa als Arbeitszylinder ausgebildete Lineareinheit.

Der Erfindung liegt die Aufgabe zugrunde, einen Arbeitszylinder der genannten Gattung zu schaffen, bei welchem der konstruktive Aufbau und die Herstellung wesentlich vereinfacht ist, und bei welchem in sämtlichen Stellungen, insbesondere aber in den sogenannten Endstellungen des Kolbens beziehungsweise der Kolbenstange eine ausreichende Energieversorgung der angeschlossenen Peripheriegeräte gewährleistet wird.

Diese Aufgabe wird erfindungsgemäss dadurch gelöst, dass der die beiden Zylinderkammern gegeneinander abdichtende Kolben an einer den Zylinderkörper in axialer Richtung durchdringenden, hohlzylindrisch ausgebildeten Kolbenstange angeordnet ist, bei welcher Kolbenstange der Innenraum einerseits für den Zufluss des Arbeitsfluids zu den Peripheriegeräten mit mindestens einem der beiden Anbauelemente in Verbindung steht und andererseits über strömungsabhängig zu öffnende oder abdichtend zu verschliessende Bohrungen oder Kanäle mit der ersten Zylinderkammer sowie der zweiten Zylinderkammer verbunden ist.

Der erfindungsgemässe Arbeitszylinder kann sowohl als einfach oder doppelt wirkend ausgebildet sein. Als besonders vorteilhaft hat sich herausgestellt, dass die hohlzylindrische Kolbenstange als sogenannter Vorratsspeicher dient, so dass bei Verwendung von gasförmigem Arbeitsfluid für die angeschlossenen Peripheriegeräte auch bei etwaigen Störungsfällen noch ausreichend Arbeitsfluid zur Verfügung steht und somit eine Notbetätigung noch möglich ist.

Weitere Merkmale der Erfindung ergeben sich aus der folgenden Beschreibung und den weiteren Patentansprüchen.

Ausführungsbeispiele der Erfindung werden nachstehend anhand der Zeichnung beschrieben. Es zeigt:
**Fig.1** einen in Schnittansicht dargestellten und von einer an beiden Enden zur Aufnahme von Peripheriegeräten mit Anbaukörpern versehenen Kolbenstange durchdrungenen Arbeitszylinder;
**Fig.2** eine perspektivische Explosionsdarstellung der wesentlichen Elemente des Arbeitszylinders gemäss Fig.1;
**Fig.3** den gemäss der Linie III-III in Fig. 1 im Schnitt dargestellten Arbeitszylinder;
**Fig.4** ein Teilstück eines in Schnittansicht dargestellten weiteren Ausführungsbeispiels des Arbeitszylinders mit dem in einem Zylinderkörper angeordneten Kolben;
**Fig.5** den gemäss der in Fig.3 eingezeichneten Pfeilrichtung A in Ansicht und teilweise aufgebrochen dargestellten Arbeitszylinder gemäss Fig.1.

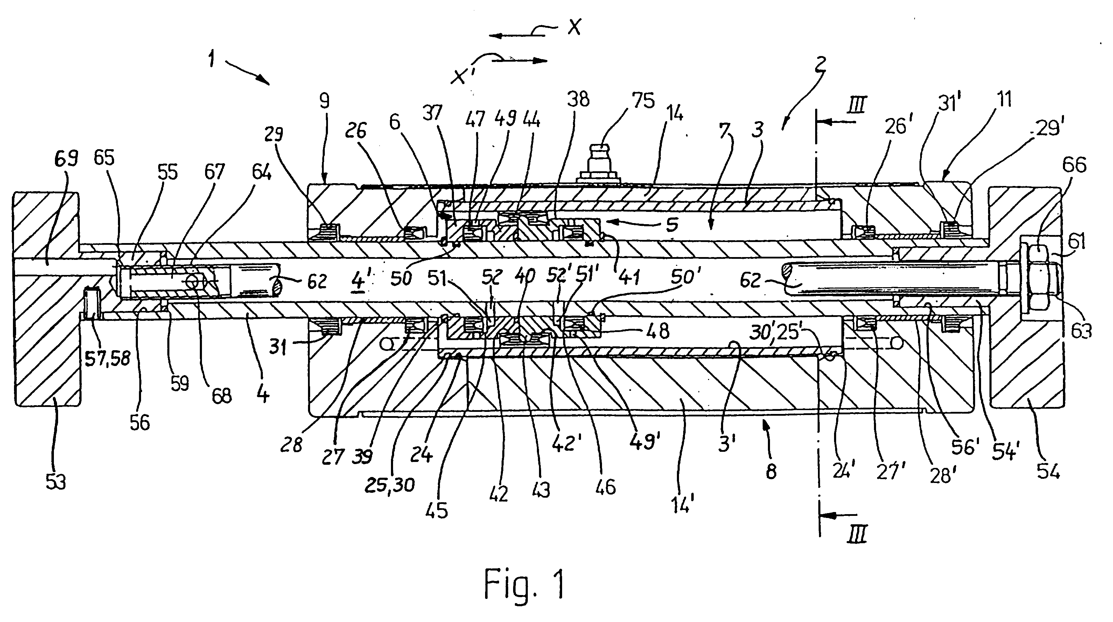

Fig.1 zeigt einen in Schnittansicht dargestellten und aus mehreren in einem Gehäuse 2 angeordneten Elementen gebildeten Arbeitszylinder 1. Der Arbeitszylinder 1 hat eine das Gehäuse 2 in axialer Richtung durchdringende und koaxial in einem Zylinderkörper 3 angeordnete sowie mit einem Kolben 5 versehene Kolbenstange 4, an welcher beispielsweise an beiden aus dem Gehäuse 2 herausragenden Enden je ein Anbauelement 53 beziehungsweise 54 angeordnet und befestigt ist. Die Anbauelemente 53,54 sind zum Anschluss weiterer, nicht näher dargestellter Peripheriegeräte ausgebildet, welche über ein am Gehäuse 2 angeordnetes Anschlussteil 75 sowie über ein entsprechend angeordnetes Kanalsystem mit einem Arbeitsfluid, beispielsweise mit Druckluft beaufschlagt werden. Das Anschlussteil 75 steht beispielsweise mit einer externen, nicht dargestellten Druckluftquelle in Verbindung. Das Gehäuse 2 umfasst im wesentlichen zwei in axialer Richtung im Abstand zueinander angeordnete und als Endstücke ausgebildete Flanschkörper 9 und 11, ein zwischen den beiden Flanschkörpern 9 und 11 angeordnetes Trägerelement 8 sowie den darin angeordneten, rohrförmig ausgebildeten Zylinderkörper 3. Der rohrförmige Zylinderkörper 3 ist mit seinen beiden nicht näher bezeichneten Enden in den beiden Flanschkörpern 9,11 gelagert. Die ebenfalls rohrförmig ausgebildete Kolbenstange 4 ist mit dem an der inneren Mantelfläche 3' des Zylinderkörpers 3 abgedichteten Kolben 5 koaxial im Zylinderkörper 3 angeordnet und gemäss Pfeilrichtung X beziehungsweise X' in axialer Richtung zwischen den beiden Flanschkörpern 9 und 11 verschiebbar.

Die beiden Flanschkörper 9 und 11 sind, wie in Fig.1 schematisch dargestellt, je mit zwei in axialer Richtung im Abstand zueinander angeordneten Nuten 26 und 29 beziehungsweise 26' und 29' versehen. In den Nuten 26,26' und 29,29' ist je eine Dichtung, beispielsweise eine Lippendichtung 27 und 31 beziehungsweise 27' und 31' angeordnet. Zwischen den beiden Dichtungen 27 und 31 sowie 27' und 31' ist jeweils eine auf der Kolbenstange 4 gelagerte Gleitlagerbuchse 28 und 28' angeordnet. Mittels der beiden äusseren Dichtungen 31,31' wird ein Eindringen von Staub und anderen Verunreinigungen in den zwischen der Gleitlagerbuchse 28,28' und der Kolbenstange 4 bestehenden Spalt verhindert. Mittels der beiden Dichtungen 27 und 27' werden die beiden Zylinderkammern 6 und 7 nach aussen abgedichtet.

Der den Innenraum des Zylinderkörpers 3 in die beiden Zylinderkammern 6 und 7 unterteilende und an der Kolbenstange 4 angeordnete Kolben 5 wird nachstehend in Verbindung mit Fig.1 beschrieben.

Der Kolben 5 umfasst im wesentlichen zwei beispielsweise durch Sprengringe 39,41 auf der Kolbenstange 4 gegen axiales Verschieben gesicherte und mit den einander zugewandten Stirnseiten aneinanderliegende Ringkörper 37 und 38. Die beiden Ringkörper 37,38 sind jeweils mit einer äusseren, umlaufenden Nut 42,42' versehen, wobei die an dem zweiten Ringkörper 38 angeordnete Nut 42' auf der dem ersten Ringkörper 37 zugewandten Seite durch einen Wulstring 43 begrenzt ist. In den beiden Nuten 42,42' der Ringkörper 37,38 ist eine über den Wulstring 43 greifende Dichtung angeordnet, welche im dargestellten Ausführungsbeispiel als sogenannte Lippendichtung 44 ausgebildet ist. Die zweiseitig wirkende Lippendichtung 44 wird einerseits abdichtend gegen die innere Mantelfläche 3' des Zylinderrohres 3 und andererseits abdichtend gegen die nicht näher bezeichneten inneren Ringflächen der beiden an den Ringkörpern 37,38 angeordneten Nuten 42,42' gedrückt.

Der erste Ringkörper 37 ist weiterhin mit einer inneren, kreisringförmigen Nut 45 und einer abgesetzt dazu angeordneten Ausdrehung 51 versehen und durch eine Dichtung, vorzugsweise durch eine O-Ringdichtung 50 an der Kolbenstange 4 abgedichtet. Der spiegelbildlich ausgebildete zweite Ringkörper 38 ist mit einer inneren, kreisringförmigen Nut 46 und einer abgesetzt dazu angeordneten Ausdrehung 51' versehen und durch eine O-Ringdichtung 50' an der Kolbenstange 4 abgedichtet. Die beiden Dichtungen 50,50' sind jeweils in einer am äusseren Durchmesser der Kolbenstange 4 vorgesehenen, nicht näher bezeichneten Ringnut angeordnet.

Die beiden Dichtungen 50,50' verhindern, dass das in den Zylinderkammern 6 und 7 vorhandene Arbeitsfluid auf die beiden in den Nuten 45,46 angeordneten Lippendichtungen 47,48 wirkt und diese darin in axialer Richtung verschiebt. Zwischen den beiden stirnseitig aneinanderliegenden Ringkörpern 37,38 ist vorzugsweise eine weitere Dichtung 40 vorgesehen.

Die in dem ersten Ringkörper 37 vorgesehene Nut 45 sowie die abgesetzte Ausdrehung 51 stehen je über mindestens eine radial die Kolbenstange 4 durchdringende Bohrung 52 mit dem Innenraum 4' der Kolbenstange 4 in Verbindung. Der mit der Nut 46 und der Ausdrehung 51' versehene zweite Ringkörper 38 mit der zugeordneten Bohrung 52' ist analog ausgebildet, so dass die Nut 46 und die Ausnehmung 51' ebenfalls mit dem Innenraum 4' der Kolbenstange 4 in Verbindung steht.

In den beiden Nuten 45 und 46 der Ringkörper 37 und 38 ist jeweils eine Dichtung eingesetzt, welche beispielsweise als Lippendichtung 47,48 ausgebildet sind. Die beiden Lippendichtungen 47 und 48 sind derart in den Nuten 45 und 46 angeordnet, dass die Lippen, wie in Fig.1 dargestellt, einander zugewandt sind. Die den beiden Nuten 45 und 46 zugeordneten Ausnehmungen 51,51' stehen jeweils über mindestens eine radial nach innen orientierte Bohrung 52,52' mit dem Innenraum 4' der hohlzylindrischen Kolbenstange 4 in Verbindung. Das in den Zylinderkammern 6 und 7 unter Druck stehende Arbeitsfluid kann somit über mindestens eine in Umfangsrichtung am ersten und zweiten Ringkörper 37,38 vorgesehene Bohrung 49 und 49' in die Nuten 45,46 und Ausdrehungen 51,51' und von dort über die Bohrungen 52 beziehungsweise 52' in den Innenraum 4' der Kolbenstange 4 gelangen. Die beiden Lippendichtungen 47 und 48 haben dabei im wesentlichen die Funktion eines Rückschlagventils.

Die an den beiden Enden der Kolbenstange 4 angeordneten Anbauelemente 53 und 54 sind in nicht näher dargestellter Weise zur Aufnahme und Befestigung von nicht dargestellten Peripheriegeräten ausgebildet. Das erste Anbauelement 53 ist mit einem angeformten, zylindrischen Teilstück 55 in einer Ausdrehung 56 der Kolbenstange 4 eingesetzt und stirnseitig durch eine Dichtung 59 abgedichtet. Das erste Anbauelement 53 ist mit mindestens einem in eine Bohrung 58 des Teilstücks 55 einsetzbaren oder einschraubbaren Stift 57 oder dergleichen gehalten. Der Stift 57 verhindert gleichzeitig ein Verdrehen des ersten Anbauelements 53 relativ zur nicht bezeichneten Längsachse der Kolbenstange 4.

In dem zylindrischen Teilstück 55 des ersten Anbauelements 53 ist, wie in Fig.1 dargestellt, eine als Sackloch ausgebildete Gewindebohrung 65 sowie eine damit in Verbindung stehende Bohrung 69 angeordnet. In die Gewindebohrung 65 ist eine die Kolbenstange 4 in axialer Richtung durchdringende und am anderen Ende mit einem Gewindestück 64 versehene Zugstange 62 eingeschraubt. An dem dem Anbauelement 53 zugewandten Ende ist in der Zugstange 62 eine in axialer Richtung orientierte Sacklochbohrung 67 vorgesehen, welche über eine quer dazu orientierte Bohrung 68 mit dem Innenraum 4' der Kolbenstange 4 in Verbindung steht. Das im Innenraum 4' der Kolbenstange 4 vorhandene Arbeitsfluid kann somit über die Bohrungen 68,67 und 69 beispielsweise einem oder mehreren am ersten Anbauelement 53 angeordneten, nicht dargestellten Peripheriegerät (Arbeitszylinder) zugeführt werden.

Das zweite, mit einem angeformten zylindrischen Teilstück 54' in eine Ausdrehung 56' der Kolbenstange 4 abgedichtet eingesetzte Anbauelement 54 wird von dem anderen Ende der Zugstange 62 durchdrungen und hat zur Aufnahme einer am Gewindestück 63 aufgeschraubten Mutter 66 eine entsprechend dimensionierte und ausgebildete Ausnehmung 61. Mittels der auf die Zugstange 62 aufgeschraubten Mutter 66 können die beiden Anbauelemente 53 und 54 gegen die Kolbenstange 4 verspannt werden, so dass die Teile 4 sowie 53 und 54, wie in Fig.1 mit Pfeilrichtung X und X' dargestellt, in axialer Richtung verschiebbar sind. Von der sich über die gesamte Länge des Arbeitszylinders 1 erstreckenden und die Kolbenstange 4 in axialer Richtung durchdringenden Zugstange 62 sind in Fig.1 nur die mit den Anbauelementen 53 und 54 in Wirkverbindung stehenden Endstücke dargestellt.

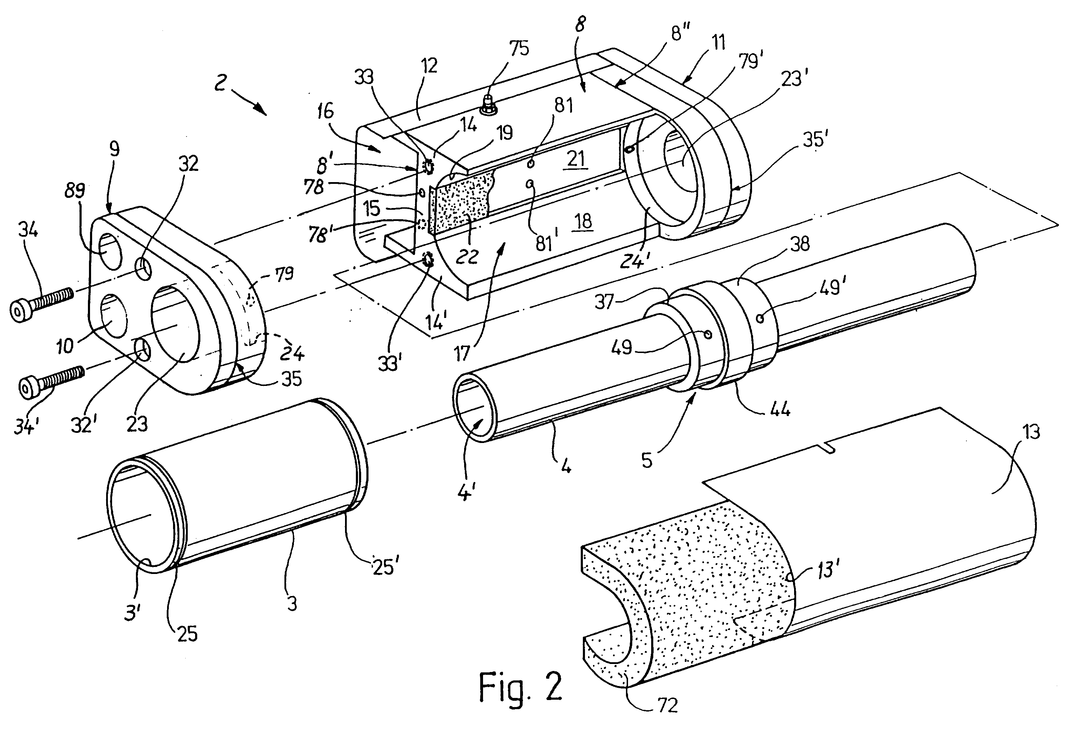

Fig.2 zeigt das die wesentlichen Elemente 3, 4, 5, 8, 9, 11, 12 und 13 umfassende Gehäuse 2 des Arbeitszylinders 1 in perspektivischer Explosionsdarstellung, wobei die einzelnen Elemente nachstehend beschrieben werden.

Das im wesentlichen als Mittelstück ausgebildete und zwischen den beiden Flanschkörpern 9 und 11 angeordnete Trägerelement 8 hat zwei parallel zueinander angeordnete und durch einen senkrechten Steg 15 beabstandete Flanschen 14 und 14' und ist, wie in Fig.2 dargestellt, im Profilquerschnitt etwa **I-**förmig ausgebildet. Das Trägerelement 8 hat somit auf der einen Seite des Steges 15 einen in Längsrichtung orientierten und durch die beiden Teilstücke der Flanschen 14,14' begrenzten sowie durch eine Verkleidung 12 weitgehend verschliessbaren ersten Raum 16, welcher im Profilquerschnitt etwa rechteckig ausgebildet ist. Auf der anderen Seite des Steges 15 ist ein ebenfalls in Längsrichtung orientierter und zur Aufnahme des Zylinderkörpers 3 ausgebildeter zweiter Raum 17 vorgesehen, welcher durch eine Verkleidung 13 verschliessbar ist. Der zweite Raum 17 hat am Übergang vom Steg 15 zu den beiden Flanschen 14,14' entsprechend dem Aussendurchmesser des einsetzbaren Zylinderkörpers 3 halbkreisbogenförmig ausgebildete Wandteile 18 und 19, welche beispielsweise an den Flanschen 14,14' sowie am Steg 15 des Trägerelements 8 angeformt sind.

In dem in Längsrichtung orientierten Steg 15 des Trägerelements 8 sind im Abstand zueinander angeordnete Kanäle 78,78' vorgesehen, welche später in Verbindung mit den damit verbundenen Elementen noch beschrieben werden.

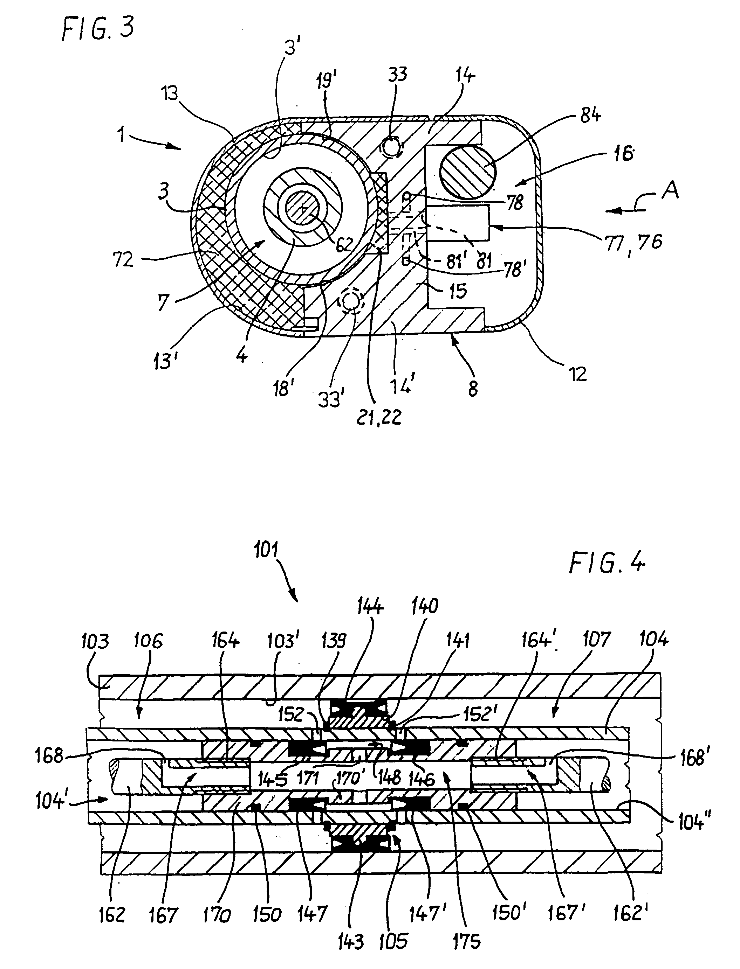

An der dem zweiten Raum 17 zugewandten Seite ist an dem Steg 15 eine in Längsrichtung des Trägerelements 8 orientierte und zur Aufnahme eines gasdurchlässigen, kompressiblen Dämpfungselements 22 ausgebildete Nut 21 vorgesehen. Das streifenförmig ausgebildete Dämpfungselement 22 dient als Anlage für den in den zweiten Raum 17 einsetzbaren Zylinderkörper 3, welcher von den beiden überstehenden Flanschteilstücken (nicht bezeichnet) etwa klauenförmig übergriffen wird (Fig.3). Zwischen dem Aussendurchmesser des Zylinderkörpers 3 und den beiden Wandteilen 18,19 ist ein sich in Längsrichtung erstreckender, schlitzförmiger Spalt 18',19' (Fig.3) für den Durchlass von Abluft vorgesehen. Das Trägerelement 8 wird an den beiden Enden von zwei parallel zueinander angeordneten Stirnseiten 8' und 8'' begrenzt, an welchen die beiden Flanschkörper 9 und 11 dicht anliegend befestigt werden. Zur Befestigung des ersten Flanschkörpers 9 sind an der Stirnseite 8', wie in Fig.2 dargestellt, mindestens zwei beabstandete und in Längsrichtung des Trägerelements 8 orientierte Gewindebohrungen 33,33' vorgesehen. An der gegenüberliegenden Stirnseite 8'' des Trägerelements 8 sind analog angeordnete Gewindebohrungen (nicht dargestellt) zur Befestigung des mit entsprechend zugeordneten Bohrungen versehenen zweiten Flanschkörpers 11 angeordnet.

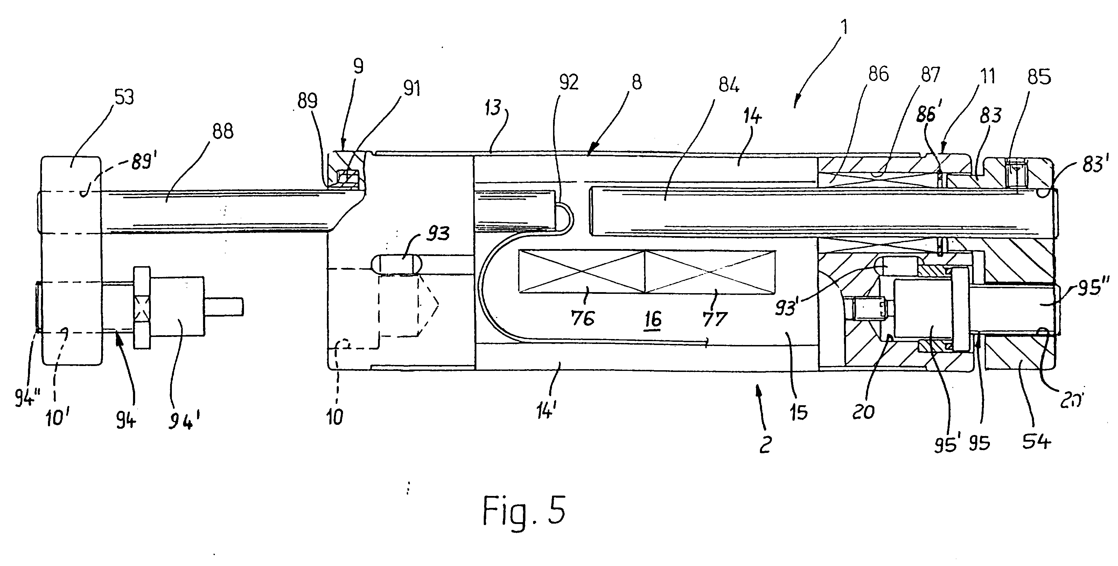

Die beiden Flanschkörper 9 und 11 sind spiegelsymmetrisch ausgebildet, so dass als Ausführungsbeispiel nachstehend der eine Flanschkörper 9 näher beschrieben wird. Der erste Flanschkörper 9 hat eine denselben durchdringende Bohrung 23. Auf der dem Trägerelement 8 zugewandten Seite hat die Bohrung 23 ein im Durchmesser stufenförmig abgesetzt ausgebildetes Bohrungsteil 24. Das abgesetzte Bohrungsteil 24 ist derart ausgebildet, dass das in zusammengebautem Zustand teilweise aus dem Trägerelement 8 hervorstehende und mit einer eingesetzten O-Ringdichtung 30 versehene Ende des Zylinderkörpers 3 in dem abgesetzten Bohrungsteil 24, wie in Fig.1 dargestellt, koaxial angeordnet ist. In dem ersten Flanschkörper 9 sind achsparallel zu der Bohrung 23 zwei mit den Gewindebohrungen 33,33' im Trägerelement 8 korrespondierende Bohrungen 32, 32' vorgesehen, welche zur bündigen Aufnahme der Schrauben 34,34' entsprechend abgesetzt ausgebildet sind. Mittels der Schrauben 34, 34' wird der erste Flanschkörper 9 an der Stirnseite 8' des Trägerelements 8 befestigt. In dem ersten Flanschkörper 9 sind weiterhin zwei denselben durchdringende Bohrungen 89 und 10 angeordnet, welche zur Aufnahme entsprechender Führungselemente ausgebildet sind und später in Verbindung mit Fig.5 noch beschrieben werden.

Der zweite mit den Durchgangsbohrungen 23',79' und 24' versehene Flanschkörper 11 ist im wesentlichen analog dem vorstehend beschriebenen ersten Flanschkörper 9 ausgebildet, wobei die Befestigung an der Stirnseite 8'' des Trägerelements 8 ebenfalls analog erfolgt.

Die Flanschkörper 9 und 11 sind, wie in Fig.2 dargestellt, an der äusseren Kontur jeweils mit einem umlaufenden Absatz 35, 35' versehen, welche derart ausgebildet und bemessen sind, dass jeweils die von beiden Seiten auf das Trägerelement 8 aufgesetzten Verkleidungen 12 und 13 (Deckel) mit den nicht bezeichneten Aussenflächen der Flanschkörper 9 und 11 eine glatte Fläche bilden (Fig.1, 3). Die erste Verkleidung 13 ist auf der in zusammengebautem Zustand dem Zylinderkörper 3 zugewandten Seite mit einem sich in Längsrichtung erstreckenden zweiten Dämpfungskörper 72 versehen, welcher an der Innenseite 13' der Verkleidung 13 mit nicht dargestellten Mitteln befestigt ist.

Der in Fig.2 dargestellte, rohrförmige Zylinderkörper 3 hat an den Enden jeweils eine umlaufende Ringnut 25 und 25', welche zur Aufnahme einer O-Ringdichtung 30,30' dient, mittels welcher der Zylinderkörper 3 in dem jeweils zugeordneten abgesetzten Bohrungsteil 24 oder 24' des ersten Flanschkörpers 9 beziehungsweise des zweiten Flanschkörpers 11, wie in Fig.1 dargestellt, abgedichtet eingesetzt ist.

Weiterhin ist in Fig.2 die in axialer Richtung von einer den Innenraum 4' bildenden Bohrung durchdrungene Kolbenstange 4 in perspektivischer Ansicht dargestellt, an welcher der vorstehend in Verbindung mit Fig.1 bereits beschriebene Kolben 5 angeordnet ist. Der Kolben 5 umfasst wie bereits erwähnt die beiden jeweils mit den radial nach innen gerichteten Bohrungen 49 und 49' versehenen Ringkörper 37 und 38 sowie die daran angeordnete Lippendichtung 44.

In Fig.3 ist der Arbeitszylinder 1 im wesentlichen im Profilquerschnitt gemäss der in Fig.1 eingezeichneten Linie III-III dargestellt, und man erkennt das im Profilquerschnitt **I**-förmig ausgebildete Trägerelement 8 mit dem darin angeordneten Zylinderrohr 3 sowie die beiden am Trägerelement 8 mit nicht dargestellten Mitteln befestigten Verkleidungen 12 und 13 (Deckel). Das in bezug auf die kreisbogenförmige Kontur der Verkleidung 13 exzentrisch angeordnete Zylinderrohr 3 wird teilweise von dem an der Innenseite 13' der Verkleidung 13 sowie in der Nut 21 des Steges 15 angeordneten Dämpfungsmaterial 72 und 22 umgeben.

Das Dämpfungsmaterial 72 und 22 besteht, wie bereits erwähnt, aus einem luftdurchlässigen, zusammendrückbarem Material in Form eines porösen, offenzelligen Schaumstoffes oder Fasermaterials, welches beispielsweise zu einem Gestrick, Gewirk oder Gewebe verarbeitet ist. Die Verwendung des als Gewirk oder Gestrick hergestellten Materials wird bevorzugt, womit erreicht wird, dass die abströmende Druckluft keine das Dämpfungsmaterial zerstörende Kanäle verursacht. Das im ersten Innenraum 17 des Trägerelements 8 zwischen den beiden Flanschen 14,14' angeordnete Zylinderrohr 3 ist mit der der Verkleidung 13 zugewandten Seite über die gesamte Länge von dem Dämpfungsmaterial 72 umgeben.

Die Zufuhr der Druckluft zu dem Arbeitszylinder 1 erfolgt im wesentlichen über das schematisch dargestellte und am Trägerelement 8 befestigte Anschlussteil 75 (Fig.1 und Fig.2), welches beispielsweise in eine am Trägerelement 8 vorgesehene, nicht näher dargestellte Gewindebohrung eingeschraubt ist. An dem Steg 15 sind zwei beispielsweise in Längsrichtung des Trägerelements 8 hintereinander angeordnete Magnetventile 76 und 77 (Fig.5) angeordnet und mit nicht dargestellten Mitteln befestigt. Die beiden Magnetventile 76 und 77 stehen über ein im Steg 15 angeordnetes Kanalsystem für die Druckluftzuführung zu den beiden Zylinderkammern 6 und 7 in Verbindung. Das Kanalsystem umfasst mindestens die beiden Kanäle 78,78' und die in den Flanschkörper 9 und 11 vorgesehenen Bohrungen 79,79', über welche die Magnetventile 76,77 mit den beiden Zylinderkammern 6 und 7 in Verbindung stehen. In dem Steg 15 sind weiterhin mindestens zwei quer zu den Kanälen 78,78' angeordnete und mit den Magnetventilen 76,77 in Verbindung stehende Entlüftungsbohrungen 81,81' vorgesehen.

Das erste Magnetventil 76 steht beispielsweise über den im Steg 15 angeordneten Kanal 78 mit dem ersten Flanschkörper 9 in Verbindung, welchem seinerseits nicht näher dargestellte Kanäle oder Bohrungen zugeordnet sind, welche in die im abgesetzten Bohrungsteil 24 des ersten Flanschkörpers 9 vorgesehene Bohrung 79 (Fig.2) münden. Hierdurch wird erreicht, dass die erste Zylinderkammer 6 mit Druckluft beaufschlagbar ist. Das zweite Magnetventil 77 steht über den im Steg 15 angeordneten Kanal 78' mit dem zweiten Flanschkörper 11 in Verbindung, welchem seinerseits nicht näher dargestellte Kanäle oder Bohrungen zugeordnet sind, welche in die im abgesetzten Bohrungsteil 24' des zweiten Flanschkörpers 11 vorgesehene Bohrung 79' (Fig.2) münden. Hierdurch wird erreicht, dass die zweite Zylinderkammer 7 mit Druckluft beaufschlagbar ist. Die Übergänge zwischen den im Trägerelement 8 sowie in den beiden Flanschkörpern 11 und 9 angeordneten Kanäle sind in nicht näher dargestellter Weise abgedichtet. Weiterhin erkennt man in Fig.3 eine im Raum 16 angeordnete und im Schnitt dargestellte Führungsstange 84, welche später in Verbindung mit Fig.5 beschrieben wird.

Fig.4 zeigt ein weiteres, in Schnittansicht dargestelltes Ausführungsbeispiel eines in der Gesamtheit mit 101 bezeichneten Arbeitszylinders und man erkennt ein Zylinderrohr 103, eine koaxial darin angeordnete Kolbenstange 104 sowie einen an der Kolbenstange 104 angeordneten Kolben 105. Der Kolben 105 umfasst einen an der Kolbenstange 104 angeordneten und durch zwei Sprengringe 139 und 141 gegen axiales Verschieben gesicherten Ringkörper 140 sowie ein im Innenraum 104' der Kolbenstange 104 angeordnetes Zwischenstück 170. An dem Ringkörper 140 ist ein an der inneren Mantelfläche 103' des Zylinderrohres 103 anliegender Dichtring 144 angeordnet, welcher im wesentlichen durch einen umlaufenden Ringwulst 143 am Ringkörper 140 gehalten ist. Durch den im wesentlichen doppelt wirkenden Dichtring 144 wird der zwischen der Kolbenstange 104 und der Mantelfläche 103' bestehende Innenraum (nicht bezeichnet) des Zylinderrohres 103 in axialer Richtung in eine erste Zylinderkammer 106 sowie in eine zweite Zylinderkammer 107 unterteilt.

An dem einen Ende des mit einer Durchgangsbohrung 175 versehenen Zwischenstückes 170 ist eine erste Zugstange 162 und an dem anderen Ende eine zweite Zugstange 162' angeordnet. Die beiden Zugstangen 162,612' sind jeweils über ein eingeschraubtes Gewindestück 164 beziehungsweise 164' mit dem Zwischenstück 170 wirkverbunden. In den beiden Zugstangen 162, 162' ist jeweils eine in axialer Richtung mit der Durchgangsbohrung 175 in Verbindung stehende Sacklochbohrung 167 beziehungsweise 167' vorgesehen, welche jeweils über eine orthogonal dazu orientierte Bohrung 168 beziehungsweise 168' mit dem Innenraum 104' der Kolbenstange 104 in Verbindung stehen.

An dieser Stelle wird darauf hingewiesen, dass die beiden Zugstangen 162, 162' gemäss der in Fig.4 dargestellten Variante an dem jeweiligen, dem Anbauelement 53 und 54 zugewandten Endstück analog dem in Fig.1 dargestellten Ausführungsbeispiel ausgebildet sind.

An dem Zwischenstück 170 sind am äusseren Umfang zwei durch ein abgesetzt ausgebildetes Teilstück 170' beabstandete Nuten 145,146 vorgesehen, in welche jeweils eine Lippendichtung 147,147' angeordnet ist. Das zwischen den beiden Lippendichtungen 147,147' abgesetzte Teilstück 170' bildet eine Ringkammer 148, welche über mindestens eine Bohrung 171, vorzugsweise aber über mehrere am Umfang der Ringkammer 148 verteilt angeordnete Bohrungen 171 mit der Durchgangsbohrung 175 des Zwischenstücks 170 in Verbindung steht. Die beiden Kammern 106 und 107 stehen über mehrere, die Kolbenstange 104 in radialer Richtung durchdringende Bohrungen 152 und 152' mit der Ringkammer 148 und über die Bohrungen 171 mit der Durchgangsbohrung 175 des Zwischenstücks 170 in Verbindung. Die Bohrungen 152,152' in der Kolbenstange 104 werden durch die zugeordneten Lippen der Dichtungen 145,146 verschlossen. Die Lippendichtungen 145,146 wirken im wesentlichen als sogenannte Rückschlagventile. Das Zwischenstück 170 ist zu beiden Seiten der Ringkammer 148 mit entsprechend im Abstand dazu angeordneten Dichtungen 150,150' (O-Ring) an der inneren Mantelfläche 104" abgedichtet.

Das vorstehend in Verbindung mit Fig.4 beschriebene Ausführungsbeispiel wird vorzugsweise bei Kolbenstangen mit grösserem Durchmesser verwendet. Hierbei kann die eigentliche Kolbenlänge kleiner und somit die beiden Zylinderkammern 106 und 107 entsprechend grösser dimensioniert werden. In dem in Fig.4 nicht näher dargestellten vorderen Bereich sind die beiden Zugstangen 162,162' jeweils analog der in Fig.1 dargestellten Zugstange 62 ausgebildet und mit dem jeweils zugeordneten Anbaukörper 53 beziehungsweise 54 wirkverbunden.

Fig.5 zeigt den gemäss der in Fig.3 eingezeichneten Pfeilrichtung A in Ansicht und teilweise aufgebrochen dargestellten Arbeitszylinder 1. Zur besseren Darstellung der im zweiten Innenraum 16 angeordneten Elemente ist die Verkleidung 12 nicht dargestellt. Das in Fig.5 im Schnitt dargestellte zweite Anbauelement 54 ist mit einem zweiten zylindrischen Teilstück 83 in einer Bohrung 87 des Flanschkörpers 11 gelagert. In der Bohrung 87 ist weiterhin eine Buchse 86 angeordnet, welche einerseits durch das zugeordnete Trägerelement 8 und andererseits durch einen Sprengring 86' gegen axiales Verschieben gesichert ist. In der Buchse 86 ist die in einer Bohrung 83' des zweiten Anbauelements 54 angeordnete und mit dem einen Ende bis in den zweiten Innenraum 16 des Gehäuses 2 reichende Führungsstange 84 gelagert, welche mit dem anderen Ende durch eine Schraube 85 mit dem zweiten Anbauelement 54 wirkverbunden ist.

An den beiden Flanschkörpern 9 und 11 ist beispielsweise je ein schematisch dargestellter Näherungsschalter 93 beziehungsweise 93' angeordnet. Mittels der beiden Näherungsschalter 93,93' können einer nicht dargestellten Steuerlogik entsprechende Informationen in Form von Signalen zugeführt werden, wobei die Signale beispielsweise eine auf die beiden Flanschkörper 9 und 11 bezogene Endstellung darstellen. Die Endstellung der beiden Anbauelementen 53 und 54 in bezug auf das Gehäuse 2 beziehungsweise auf die Flanschkörper 9 und 11 ist jeweils durch entsprechend angeordnete Anschlagelemente einstellbar.

An dem ersten Anbauelement 53 ist, wie in Fig.5 schematisch dargestellt, eine Anschlagschraube 94 angeordnet, welche je nach Stellung des Arbeitszylinders 1 mit dem einen Ende 94' in eine zugeordnete Sacklochbohrung 10 des ersten Flanschkörpers 9 einschiebbar ist. Mit dem anderen Ende 94'' ist die Anschlagschraube 94 beispielsweise in eine Gewindebohrung 10' des Anbauelements 53 eingeschraubt und mit nicht dargestellten Mitteln gesichert.

An dem zweiten Anbauelement 54 ist, wie in Fig.5 schematisch dargestellt, eine Anschlagschraube 95 angeordnet, welche je nach Stellung des Arbeitszylinders 1 mit dem einen Ende 95' in eine zugeordnete Sacklochbohrung 20 des zweiten Flanschkörpers 11 einschiebbar ist. Mit dem anderen Ende 95'' ist die Anschlagschraube 95 beispielsweise in eine Gewindebohrung 20' des Anbauelements 54 eingeschraubt und mit nicht dargestellten Mitteln gesichert.

Wie in Fig.5 weiterhin dargestellt, ist in einer Bohrung 89' des ersten Anbauelements 53 ein Rohr 88 angeordnet und mit nicht dargestellten Mitteln befestigt. Mit dem anderen Ende ist das Rohr 88 in der den ersten Flanschkörper 9 durchdringenden und mit einer eingesetzten Dichtung 91 versehenen Bohrung 89 gelagert. Das bis in den ersten Raum 16 hineinragende Rohr 88 dient zur Aufnahme eines elektrischen Bandkabels 92, welches mit entsprechend am ersten Anbaukörper 53 angeordneten, elektrischen Kontaktelementen (nicht dargestellt) verbunden ist. Bei der in Pfeilrichtung X beziehungsweise X' orientierten Bewegung der Teile 53 und 88 wälzt sich das Bandkabel 92 auf dem Flansch 14' des Trägerelements 8 ab. Weiterhin erkennt man in Fig.5 die am Steg 15 des Trägerelements 8 angeordneten und mit nicht dargestellten Mitteln befestigten Magnetventile 76 und 77.

Die Arbeitsweise des Arbeitszylinders 1 wird nachstehend beschrieben: Beispielsweise in stromlosem Zustand der beiden Magnetventile 76,77 besteht einerseits zwischen der im ersten Flanschkörper 9 angeordneten und mit der ersten Zylinderkammer 6 in Verbindung stehenden Bohrung 79 und dem im Steg 15 des Trägerelements 8 angeordneten Kanal 78 eine erste strömungsmässige Verbindung. Eine zweite strömungsabhängige Verbindung besteht andererseits zwischen der im zweiten Flanschkörper 11 angeordneten und mit der zweiten Zylinderkammer 7 in Verbindung stehenden Bohrung 79' und dem im Steg 15 des Trägerelements 8 angeordneten Kanal 78'.

Wird beispielsweise, ausgehend von dem vorstehend beschriebenen Betriebszustand, das erste Magnetventil 76 eingeschaltet, so wird eine Verbindung zwischen der Bohrung 79' im zweiten Flanschkörper 11 abgesperrt und dadurch die Druckluft vom Anschlussteil 75 in die zweite Zylinderkammer 7 eingeleitet. Hierdurch wird der Kolben 5 in dem Zylinderrohr 3 in Pfeilrichtung X gegen den ersten Flanschkörper 9 verschoben. Das in der zweiten Zylinderkammer 7 unter Druck stehende Arbeitsfluid strömt dabei über die im zweiten Ring 38 vorgesehene Bohrung 49' in die Ringnut 46, weil die nicht bezeichnete Dichtlippe der Lippendichtung 48 infolge des anliegenden Druckes in der Ringnut 46 radial nach innen bewegt wird. Vor der Ringnut 46 und der Ausdrehung 51' strömt das Arbeitsfluid über die zugeordnete Bohrung 52' in den Innenraum 4' der Kolbenstange 4. Von dort wird das Arbeitsfluid über die in der Zugstange 62 und dem ersten Anbauelement 53 vorgesehenen Bohrungen 68, 67 65 und 69 einem weiteren, am Anbauelement 53 befestigten Peripheriegerät (nicht dargestellt) zugeführt.

Von dem am Trägerelement 8 angeordneten Anschlussteil 75 kann dem Peripheriegerät, wie vorstehend beschrieben, das Arbeitsfluid bedarfsabhängig zugeführt werden.

Sobald das erste Magnetventil 76 abgeschaltet (stromlos) wird, wird auch die Zufuhr des Arbeitsfluids zu der zweiten Zylinderkammer 7 unterbrochen, so dass nunmehr eine Verbindung mit der zweiten Zylinderkammer 7 besteht, wodurch der Druck über die Entlüfungsbohrung 81' und dem Dämpfungsmaterial 22 abgebaut wird. Ein Abströmen des Mediums aus dem am Anbauelement 53 befestigten Peripheriegerät (nicht dargestellt) ist dabei nicht möglich, weil die Lippendichtung 48 als Rückschlagventil wirkt und der im Innenraum 4' der Kolbenstange 4 bestehende Druck an der Lippendichtung 48 anliegt und dadurch die Bohrung 49' verschliesst.

Das vor den Entlüftungsbohrungen 81,81' angeordnete Dämpfungsmaterial 22 bewirkt ein nahezu geräuschloses Entweichen der Druckluft. Die aus den Entlüftungsbohrungen 81,81' entweichende Druckluft durchströmt das Dämpfungsmaterial 22 und wird über den äusseren Mantel des Zylinderrohres 3 dem Dämpfungsmaterial 72 zugeführt, durch welches die Zischgeräusche weitgehend eliminiert werden.

Beim Abschalten des ersten Magnetventils 76 kann gleichzeitig das zweite Magnetventil 77 eingeschaltet werden, wodurch die erste Zylinderkammer 6 über die im ersten Flanschkörper 9 vorgesehene Bohrung 79 unterbrochen und dabei die strömungsmässige Verbindung mit der ersten Zylinderkammer 6 hergestellt werden kann. Durch den nunmehr in der ersten Zylinderkammer 6 ansteigenden Druck des Arbeitsfluids wird der Kolben 5 zusammen mit der Kolbenstange 4 bis zur Anlage am zweiten Flanschkörper 11 in Pfeilrichtung X' (Fig.1) bewegt. Hierbei wird das Arbeitsfluid über die im ersten Ring 37 vorgesehene Bohrung 49 und Lippendichtung 47 dem Innenraum 4' der Kolbenstange 4 zugeführt. Bei dieser Strömungsrichtung gibt die Lippendichtung 47 den Weg frei, so dass das Arbeitsfluid über die Bohrungen 45,51 und 52 in den Innenraum 4' der Kolbenstange 4 gelangt. Eine Zuführung des Arbeitsfluids von der ersten Zylinderkammer 6 in die zweite Zylinderkammer 7 ist hierbei nicht möglich.

Wie aus Fig.1 ersichtlich, besteht bei der dargestellten Anordnung in jeder Betriebsstellung des Kolbens 5 die Möglichkeit, das vom Anschlussteil 75 zugeführte und unter Druck stehende Arbeitsfluid über die erste Zylinderkammer 6 oder über die zweite Zylinderkammer 7 dem ersten oder zweiten Anbauelement 53 oder 54 zuzuführen und somit die daran angeordneten Peripheriegeräte ohne zusätzliche Schläuche oder Leitungen mit dem Arbeitsfluid zu versorgen. Als Arbeitsfluid kann Druckluft oder entsprechendes Hydrauliköl verwendet werden, wobei für die Verwendung von flüssigem Arbeitsfluid (Hydrauliköl) noch weitere Massnahmen vorzusehen sind, so dass vorzugsweise ein gasförmiges Arbeitsfluid verwendet wird. Weiterhin kann anstelle von zwei 3/2-Wegventilen auch ein einziges 5/2-Wegventil eingebaut werden.

Bei dem erfindungsgemässen Arbeitszylinder sind zusätzliche Druckleitungen und Verbindungen nicht erforderlich. Zudem wird bei der Verwendung von einem gasförmigen Arbeitsfluid eine etwaige Geräuschbelästigung durch die eingesetzten Dämpfungsmaterialien 22 und 72 weitgehend verhindert.

## Patentansprüche

1. Fluidbetätigter Arbeitszylinder, bestehend aus einem an beiden Enden jeweils mit einem Flanschkörper (9,11) versehenen Gehäuse (2), einem das Gehäuse in axialer Richtung durchdringenden und in den beabstandeten Flanschkörpern (9, 11) abgedichtet gelagerten Zylinderkörper (3;103) sowie einer darin gelagerten und mit einem den Zylinderraum in axialer Richtung in zwei fluidbeaufschlagte Zylinderkammern (6,7;106, 107) unterteilenden Kolben in Wirkverbindung stehenden Kolbenstange, an welcher an den beidseitig aus dem Gehäuse (2) herausragenden Enden je ein Anbauelement (53,54) angeordnet und befestigt ist, von welchen mindestens das eine zur Aufnahme mindestens eines mit elektrisch/pneumatischer oder elektrisch/hydraulischer Energie zu versorgenden Peripheriegerätes ausgebildet ist, dadurch gekennzeichnet, dass der die beiden Zylinderkammern (6,7;106,107) gegeneinander abdichtende Kolben (5;105) an einer den Zylinderkörper (3;103) in axialer Richtung durchdringenden, hohlzylindrisch ausgebildeten Kolbenstange (4;104) angeordnet ist, bei welcher Kolbenstange (4;104) der Innenraum (4';104') einerseits für den Zufluss des Arbeitsfluids zu den Peripheriegeräten mit mindestens einem der beiden Anbauelemente (53,54) in Verbindung steht und andererseits über strömungsabhängig zu öffnende oder abdichtend zu verschliessende Bohrungen oder Kanäle mit der ersten Zylinderkammer (6;106) sowie der zweiten Zylinderkammer (7;107) verbunden ist.

2. Fluidbetätigter Arbeitszylinder nach Anspruch 1, dadurch gekennzeichnet, dass die Anbauelemente (53,54) und die hohlzylindrische Kolbenstange (4;104) mittels einer diese in axialer Richtung durchdringenden Zugstange (62;162) abgedichtet gegeneinander verspannt sind, und dass mindestens in einem Anbauelement (53,54) sowie im Endbereich der Zugstange (62;162) miteinander in Verbindung stehende Bohrungen oder Kanäle (67,68,69,65) vorgesehen und derart angeordnet sind, dass das Arbeitsfluid von dem Innenraum (4';104') der Kolbenstange (4;104) dem einen oder anderen oder aber beiden Anbauelementen (53,54) zuführbar ist.

3. Fluidbetätigter Arbeitszylinder nach Anspruch 2, dadurch gekennzeichnet, dass das Anbauelement (53,54) jeweils mit einem zylindrischen Teilstück (55) in der hohlzylindrischen Kolbenstange (4;104) koaxial gelagert ist, und dass die an beiden Enden mit einem Gewindestück (64,63) versehene Zugstange (62) durch eine Schraubverbindung mit dem zugeordneten Anbauelement (53,54) verbunden ist.

4. Fluidbetätigter Arbeitszylinder nach Anspruch 1, dadurch gekennzeichnet, dass der Kolben (5) zwei stirnseitig aneinanderliegende und gegen axiales Verschieben an der Kolbenstange (4) gesicherte Ringkörper (37,38) umfasst, welche mit einer die beiden Zylinderkammern (6,7) unterteilenden und an der inneren Mantelfläche (3') des Zylinderrohres (3) anliegenden Dichtung (44) sowie jeweils mit einer an der Kolbenstange (4) anliegenden und in einer Ringnut (45,46) angeordneten Dichtung (47,48) versehen sind, wobei die in den Ringkörpern (37, 38) angeordneten Ringnuten (45,46) jeweils über zugeordnete Bohrungen oder Kanäle (49,52;49',52') einerseits mit dem Innenraum (4') der Kolbenstange (4) und andererseits mit der zugeordneten Zylinderkammer (6,7) verbunden sind.

5. Fluidbetätigter Arbeitszylinder nach Anspruch 1, dadurch gekennzeichnet, dass der Kolben (105) einen gegen axiales Verschieben an der Kolbenstange (104) gesicherten und mit einer die beiden Zylinderkammern (106,107) unterteilenden Dichtung (144) versehenen Ringkörper (140) sowie ein in der Kolbenstange (104) angeordnetes und in axialer Richtung von einer Durchgangsbohrung (175) durchdrungenes Zwischenstück (170) umfasst, welches eine Ringkammer (148) sowie beidseitig dazu in axialer Richtung beabstandete Ringnuten (145,146) mit eingesetzten Dichtungen (147,147') aufweist, wobei die im Zwischenstück (170) angeordnete Ringkammer (148) und die Ringnuten (145,146) jeweils über Bohrungen oder Kanäle (152,152',171) mit der zugeordneten Zylinderkammer (106, 107) sowie über die Durchgangsbohrung (175) mit dem Innenraum (104') der Kolbenstange (104) verbunden sind.

6. Fluidbetätigter Arbeitszylinder nach den Ansprüchen 2 und 5, dadurch gekennzeichnet, dass die Zugstange (162,162') jeweils mit einem Gewindestück (164,164') versehen und durch eine Schraubverbindung mit dem Zwischenstück (170) verbunden ist, und dass die Durchgangsbohrung (175) über in der Zugstange (162,162') vorgesehene Bohrungen oder Kanäle (167,168, 167',168') mit dem Innenraum (104') der Kolbenstange (104) verbunden ist.

7. Fluidbetätigter Arbeitszylinder nach den Ansprüchen 4 und 5, dadurch gekennzeichnet, dass die in den Ringnuten (45,46) der Ringkörper (37,38) oder in den Ringnuten (145, 146) des Zwischenstücks (170) angeordneten Dichtungen als Lippendichtungen (47,48;147,147') ausgebildet sind, welche mit den radial nach innen beweglichen Lippenteilen den mit den beiden Zylinderkammern (6,7;106,107) in Verbindung stehenden und strömungsabhängig zu öffnenden oder zu verschliessenden Bohrungen oder Kanälen (49,49';152,152') zugeordnet sind.

8. Fluidbetätigter Arbeitszylinder nach Anspruch 1, dadurch gekennzeichnet, dass das Gehäuse (2) ein im Profilquerschnitt etwa **I**-förmig ausgebildetes Trägerelement (8) aufweist, welches auf der einen Seite eines sich in Längsrichtung erstreckenden Steges (15) zur formschlüssigen Aufnahme des Zylinderkörpers (3) mit zwei korrespondierend zueinander angeordneten, im Profilquerschnitt entsprechend dem Zylinderkörper (3) etwa halbkreisförmig ausgebildeten Wandteilen (18,19) versehen ist.

9. Fluidbetätigter Arbeitszylinder nach Anspruch 8, dadurch gekennzeichnet, dass an dem Steg (15) des Trägerelements (8) eine in Längsrichtung orientierte Nut (21) zur Aufnahme eines streifenförmigen, ersten Dämpfungselements (22) angeordnet ist, welches als Anlage für den auf der gegenüberliegenden Seite in einem zweiten Dämpfungselement (72) eingebetteten Zylinderkörper (3) vorgesehen ist, wobei das zweite Dämpfungselement (72) mittels einer am Trägerelement (8) befestigten zweiten Verkleidung (13) gehalten ist.

10. Fluidbetätigter Arbeitszylinder nach Anspruch 8, dadurch gekennzeichnet, dass an der anderen Seite des Steges (15) mindestens zwei Magnetventile (76;77) zur Steuerung der Zufuhr des Arbeitsfluids zu den einzelnen Zylinderkammern (6,7;106,107) angeordnet sind, wobei die beiden Magnetventile (76,77) durch eine am Trägerelement (8) befestigte erste Verkleidung(12) geschützt sind.

## Claims

1. Fluid-actuated working cylinder consisting of a housing (2) provided with a respective flange body (9, 11) at both ends, a cylinder body (3; 103) axially penetrating the housing and mounted in a sealed manner in the spaced flange bodies (9, 11) and a piston rod which is mounted therein, cooperates with a piston axially dividing the cylinder chamber into two fluid-loaded cylinder chambers (6, 7; 106, 107) and on which there is arranged and fastened at the ends projecting from the housing (2) on either side a respective attachment (53, 54) of which at least one is designed to receive at least one peripheral device which is to be supplied with electric/pneumatic or electric/hydraulic power, characterised in that the piston (5; 105) mutually sealing the two cylinder chambers (6, 7; 106, 107) is arranged on a piston rod (4; 104) which axially penetrates the cylinder body (3; 103), is designed in the form of a hollow cylinder and in which piston rod (4; 104) the interior (4'; 104') communicates on the one hand with at least one of the two attachments (53, 54) for the supply of working fluid to the peripheral devices and on the other hand via bores or ducts which are to be opened or closed in a sealed manner as a function of the flow with the first cylinder chamber (6; 106) and the second cylinder chamber (7; 107).

2. Fluid-actuated working cylinder according to claim 1, characterised in that the attachments (53, 54) and the hollow cylindrical piston rod (4; 104) are braced relative to one another in a sealed manner by means of a traction rod (62; 162) axially penetrating them and in that interconnected bores or ducts (67, 68, 69, 65) are provided at least in one attachment (53, 54) and in the end region of the traction rod (62; 162) and are arranged in such a way that the working fluid can be supplied from the interior (4'; 104') of the piston rod (4; 104) to one or other or both attachments (53, 54).

3. Fluid-actuated working cylinder according to claim 2, characterised in that the attachment (53, 54) is coaxially mounted with a respective cylindrical portion (55) in the hollow cylindrical piston rod (4; 104) and in that the traction rod (62) provided with a screw-threaded piece (64, 63) at both ends is connected to the associated attachment (53, 54) by a screw connection.

4. Fluid-actuated working cylinder according to claim 1, characterised in that the piston (5) comprises two annular bodies (37, 38) which rest against one another at the end face, are secured against axial displacement on the piston rod (4) and are provided with a seal (44) dividing the two cylinder chambers (6, 7) and resting on the internal surface (3') of the cylinder tube (3) and with a respective seal (47, 48) resting on the piston rod (4) and arranged in an annular groove (45, 46), wherein the annular grooves (45, 46) arranged in the annular bodies (37, 38) are connected in each case via associated bores or ducts (49, 52; 49', 52') on the one hand to the interior (4') of the piston rod (4) and on the other hand to the associated cylinder chamber (6, 7).

5. Fluid-actuated working cylinder according to claim 1, characterised in that the piston (105) comprises an annular body (140) which is secured against axial displacement on the piston rod (104) and is provided with a seal (144) dividing the two cylinder chambers (106, 107) and a transition piece (170) which is arranged in the piston rod (104), is axially penetrated by a through-bore (175) and has an annular chamber (148) and annular grooves (145, 146) which are axially spaced on either side of it with inserted seals (147, 147'), wherein the annular chamber (148) arranged in the transition piece (170) and the annular grooves (145, 146) are connected via respective bores or ducts (152, 152', 171) to the associated cylinder chamber (106, 107) and via the through-bore (175) to the interior (104') of the piston rod (104).

6. Fluid-actuated working cylinder according to claims 2 and 5, characterised in that the traction rod (162, 162') is provided with a respective screw-threaded piece (164, 164') and is connected to the transition piece (170) by a screw connection and in that the through-bore (175) is connected via bores or ducts (167, 168, 167', 168') provided in the traction rod (162, 162') to the interior (104') of the piston rod (104).

7. Fluid-actuated working cylinder according to claims 4 and 5, characterised in that the seals arranged in the annular grooves (45, 46) of the annular body (37, 38) or in the annular grooves (145, 146) of the transition piece (170) are designed as lip seals (47, 48; 147, 147') which are allocated with the radially inwardly movable lip parts to the bores or ducts (49, 49'; 152, 152') which communicate with the two cylinder chambers (6, 7; 106, 107) and are to be opened or closed as a function of the flow.

8. Fluid-actuated working cylinder according to claim 1, characterised in that the housing (2) has a carrier element (8) which is substantially I-shaped in design in the profile cross section and is provided on one side of a longitudinally extending web (15) for the positive reception of the cylinder body (3) with two wall parts (18, 19) which are arranged so as to correspond to one another and are substantially semicircular in design in the profile cross section to correspond to the cylinder body (3).

9. Fluid-actuated working cylinder according to claim 8, characterised in that a longitudinally orientated groove (21) is arranged on the web (15) of the carrier element (8) for receiving a strip-shaped first damping element (22) provided as a support for the cylinder body (3) embedded in a second damping element (72) on the opposite side, wherein the second damping element (72) is held by a second cladding (13) fastened on the carrier element (8).

10. Fluid-actuated working cylinder according to claim 8, characterised in that at least two solenoid valves (76; 77) are provided on the other side of the web (15) for controlling the supply of the working fluid to the individual cylinder chambers (6, 7; 106, 107), the two solenoid valves (76, 77) being protected by a first cladding (12) fastened on the carrier element (8).

## Revendications

1. Cylindre de travail actionné par un fluide comprenant un boîtier (2) pourvu, à chacune des deux extrémités, d'une bride (9,11), un corps de cylindre (3;103) traversant le boîtier et logé de façon étanche dans les brides opposées (9,11) ainsi qu'une tige de piston logée dans le boîtier en liaison active avec un piston et divisant l'espace cylindrique, en direction axiale, en deux chambres de cylindre (6,7;106,107) subissant l'action du fluide et aux extrémités de laquelle qui dépassent des deux côtés le boîtier (2) sont disposés et fixés des éléments de raccord (53,54) desquels au moins l'un est conçu pour recevoir au moins un appareil périphérique à alimenter en énergie électrique/pneumatique ou électrique/hydraulique, caractérisé en ce que le piston (5;105) isolant mutuellement les deux chambres de cylindre (6,7;106,107) est disposé sur une tige de piston (4;104) conçue cylindrique et creuse et traversant le corps de cylindre (3;103) en direction axiale, en ce que l'espace intérieur (4';104') de la tige de piston (4;104), d'une part, est en communication avec au moins l'un des deux éléments de raccord (53,54) pour l'écoulement du fluide de travail vers les appareils périphériques et, d'autre part, est relié à la première chambre de cylindre (6;106) ainsi qu'à la seconde chambre de cylindre (7;107) à travers des alésages et canaux à ouvrir ou fermer de manière étanche suivant le courant.

2. Cylindre de travail actionné par un fluide selon la revendication 1, caractérisé en ce que les éléments de raccord (53,54) et la tige de piston creuse cylindrique (4;104) sont mutuellement boulonnés, de manière étanche, au moyen d'un tirant (62;162) traversant la tige de piston (4;104) en direction axiale et en ce que, dans au moins un élément de raccord (53;54) ainsi que dans la région terminale du tirant (62;162), sont prévus des alésages ou canaux (67,68,69,65) en communication mutuelle et disposés de telle manière que du fluide de travail peut être dirigé de l'espace intérieur (4;104) de la tige de piston (4;104) vers l'un ou l'autre ou vers les deux éléments de raccord (53,54).

3. Cylindre de travail actionné par un fluide selon la revendication 2, caractérisé en ce que chaque élément de raccord (53,54) est logé coaxialement dans la tige de piston cylindrique creuse (4;104) au moyen d'une excroissance cylindrique (55) et en ce que le tirant (62) pourvu aux deux extrémités de filetages (64,63) est relié à l'élément de raccord correspondant (53,54) au moyen d'un raccord à vis.

4. Cylindre de travail actionné par un fluide selon la revendication 1, caractérisé en ce que le piston (5) comporte deux corps annulaires (37,38) juxtaposés frontalement et fixés axialement sur la tige de piston (4) et qui sont pourvus d'un joint (44) séparant les deux chambres de piston (6,7) et appliqués sur la surface latérale intérieure (3') du corps de cylindre (3), ainsi que, chacun, d'un joint (47,48) disposé dans une rainure annulaire (45,46) en appui sur la tige de piston (4) et en ce que les rainures annulaires (45,46) prévues dans les corps annulaires (37,38) communiquent chacune, d'une part, avec l'espace intérieur (4') de la tige de piston et, d'autre part, avec la chambre de cylindre correspondante (6,7) à travers des alésages et canaux correspondants (59,52;49',52').

5. Cylindre de travail actionné par un fluide selon la revendication 1, caractérisé en ce que le piston (105) comporte un corps annulaire (140) fixé axialement sur la tige de piston (104) et pourvu d'un joint (144) séparant les deux chambres de cylindre (106,107) ainsi qu'une pièce intermédiaire (170) disposée dans la tige de piston (104) et traversé par un alésage de passage (175) et qui comporte une chambre annulaire (148) et, de part et d'autre de celle-ci, des rainures annulaires (145,146) espacées axialement et équipées de joints (147,147') et en ce que la chambre annulaire (148) prévue dans la pièce intermédiaire (170) ainsi que les rainures (145,146) communiquent, chacune, à travers des alésages ou canaux (152,152',17') avec la chambre de cylindre correspondante (106,107) et, à travers l'alésage de passage (175), avec l'espace intérieur (104') de la tige de piston (104).

6. Cylindre de travail actionné par un fluide selon les revendications 2 et 5, caractérisé en ce que chaque tirant (162,162') est pourvu d'un filetage (164,164') et est relié par un raccord à vis à la pièce intermédiaire (170) et en ce que l'alésage de passage (175) communique avec l'espace intérieur (104') de la tige de piston (104) à travers des alésages et canaux (167,168,167',168') prévus dans la tirant (162,162').

7. Cylindre de travail actionné par un fluide selon les revendications 4 et 5, caractérisé en ce que les joints prévus dans les rainures annulaires (45,46) des corps annulaires (37,38) ou dans les rainures annulaires (145,146) de la pièce intermédiaire (170) sont conçus comme joints en U (47,48;147,147') dont les parties de lèvres déplaçables radialement vers l'intérieur sont associées aux alésages ou canaux (49,49';152,152') qui communiquent avec les deux chambres de cylindre (6,7;106,107) et qui sont à ouvrir et fermer en fonction du courant.

8. Cylindre de travail actionné par un fluide selon la revendication 1, caractérisé en ce que le boîtier (2) comporte un élément de support dont la section de profil est en forme de I qui, d'un côté d'une entretoise (15) s'étendant dans le sens longitudinal est pourvue de deux parties de paroi (18,19) correspondantes qui, en vue d'une réception intime du corps de cylindre (3), ont une section de profil en demi-cercle correspondant au corps de cylindre (3)

9. Cylindre de travail actionné par un fluide selon la revendication 8, caractérisé en ce qu'une rainure (21) orientée longitudinalement est prévue sur l'entretoise (15) de l'élément de support (8) pour la réception d'un premier élément d'amortissement allongé (22) qui sert d'appui au corps cylindrique (3) qui est enrobé, du côté opposé, dans un second élément d'amortissement (72), ce second élément d'amortissement (72) étant maintenu au moyen d'un couvercle (13) fixé à l'élément de support (8).

10. Cylindre de travail actionné par un fluide selon la revendication 8, caractérisé en ce que au moins deux électro-vannes (76;77) sont disposées sur l'autre côté de l'entretoise (15) pour la commande de l'amenée de fluide de travail dans chacune des chambres de cylindre (6,7;106,107), ces électro-vannes (76,77) étant protégées par un couvercle (12) fixé à l'élément de support (8).
